(19) Europäisches Patentamt
European Patent Office
Office européen des brevets

(11) **EP 3 902 329 A1**

(12) **EUROPEAN PATENT APPLICATION**
published in accordance with Art. 153(4) EPC

(43) Date of publication:
**27.10.2021  Bulletin 2021/43**

(21) Application number: **19915045.9**

(22) Date of filing: **14.02.2019**

(51) Int Cl.:
**H04W 48/10** *(2009.01)*

(86) International application number:
**PCT/CN2019/075124**

(87) International publication number:
**WO 2020/164077 (20.08.2020 Gazette 2020/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **XU, Jing**
**Dongguan, Guangdong 523860 (CN)**

(74) Representative: **Penza, Giancarlo**
**Bugnion S.p.A.**
**Viale Lancetti, 17**
**20158 Milano (IT)**

(54) **RESOURCE ALLOCATION METHOD, TERMINAL DEVICE, AND NETWORK DEVICE**

(57)  Disclosed are a resource allocation method, a terminal device, a network device, a chip, a computer readable storage medium, a computer program product, and a computer program. The method comprises: receiving first information, wherein the first information is used for obtaining a transmission resource or the first information comprises pre-configured/semi-statically configured transmission resources indicated by a network side; determining a transmission resource of a first type of service on the basis of the first information.

Receiving first information; herein the first information is used for obtaining a transmission resource, or the first information includes a pre-configured/semi-statically configured transmission resource indicated by a network side — 21

Determining a transmission resource of a service of a first category based on the first information — 22

**FIG. 2**

**Description**

Technical Field

The present invention relates to a technical field of information processing, in particular to a resource configuration method, a terminal device, a network device, a chip, a computer readable storage medium, a computer program product and a computer program.

Background

In a 5G system, according to requirements, services may be divided into three main application scenarios, which are respectively Enhanced Mobile Broadband (eMBB), Massive Machine Type Communications (mMTC) and Ultra Reliability and Low Latency Communication (uRLLC). In an uRLLC topic of Release 15, services with high reliability and low latency are taken into consideration and dealt with. In Rel-16, a concept of Time Sensitive Networking (TSN) is introduced.

However, in related technologies, there are a problem of how to transmit services during a specific TSN service, and a problem how to transmit services when start points are not aligned.

Summary

To solve above technical problems, embodiments of the present invention provide a resource configuration method, a terminal device, a network device, a chip, a computer readable storage medium, a computer program product, and a computer program.

In a first aspect, a resource configuration method is provided, applied to a terminal device, the method includes:

receiving first information; wherein the first information is used for obtaining transmission resources, or the first information includes a pre-configured/semi-statically configured transmission resource indicated by a network side; and

determining, based on the first information, a transmission resource of a service of a first category.

In a second aspect, a resource configuration method is provided, applied to a network device, the method includes:

sending first information to a terminal device;

wherein the first information is used for obtaining a transmission resource, or the first information includes a pre-configured/semi-statically configured transmission resource indicated by a network side.

In a third aspect, a terminal device is provided, which includes:

a first communication unit, which receives first information; wherein the first information is used for obtaining a transmission resource, or the first information includes a pre-configured/semi-statically configured transmission resource indicated by a network side; and

a first processing unit, which determines a transmission resource of a service of a first category based on the first information.

In a fourth aspect, a network device is provided, which includes:

a second communication unit, which sends first information to a terminal device;

wherein the first information is used for obtaining a transmission resource, or the first information includes a pre-configured/semi-statically configured transmission resource indicated by a network side.

In a fifth aspect, a terminal device is provided, which includes a processor and a memory. The memory is configured to store a computer program, and the processor is configured to call and run the computer program stored in the memory to perform the method in the first aspect or in various implementation modes thereof.

In a sixth aspect, a network device is provided, which includes a processor and a memory. The memory is configured to store a computer program, and the processor is configured to call and run the computer program stored in the memory to perform the method in the second aspect or various implementation modes thereof.

In a seventh aspect, there is provided a chip, configured to implement the method in any one of the above first to second aspects or each implementation thereof.

Specifically, the chip includes a processor, which is configured to call and run a computer program from a memory to enable a device in which the chip is installed to perform the method in any one of the above first aspect and second aspect or in various implementations thereof.

In an eighth aspect, a computer readable storage medium is provided, which is configured to store a computer program, wherein when the computer program is run on a computer, the computer is enabled to perform the method according to any one of the first and second aspects described above and various implementations thereof.

In a ninth aspect, a computer program product is provided, which includes computer program instructions, wherein when the computer instructions are executed by a computer, the computer is enabled to perform the method according to any one of the first and second aspects described above and various implementations thereof.

In a tenth aspect, a computer program is provided, when the computer program is run on a computer, the computer is enabled to perform the method according to any one of the first and second aspects described above and various implementations thereof.

By adopting the above solution, the transmission resource of the service of the first category may be determined based on the first information sent by the network device, thus solving the problem that the current CG/SPS period cannot match the specific period of the service of the first category, and the problem of how to transmit the specific service of the first category and how to indicate/configure the resource for the service of the first category. In addition, the transmission resource may be determined through the first information, ensuring that the service of the first category may be transmitted in a case that the service arrival point or service transmission duration is not aligned with a start point of a 5G symbol, such that the flexibility of TSN service resource allocation/scheduling/indication is increased, which is suitable for wider service scenarios.

Brief Description of Drawings

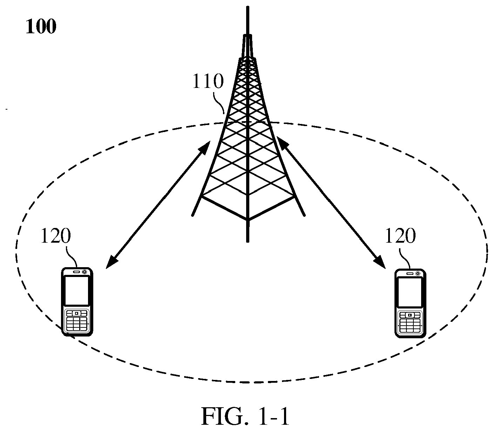

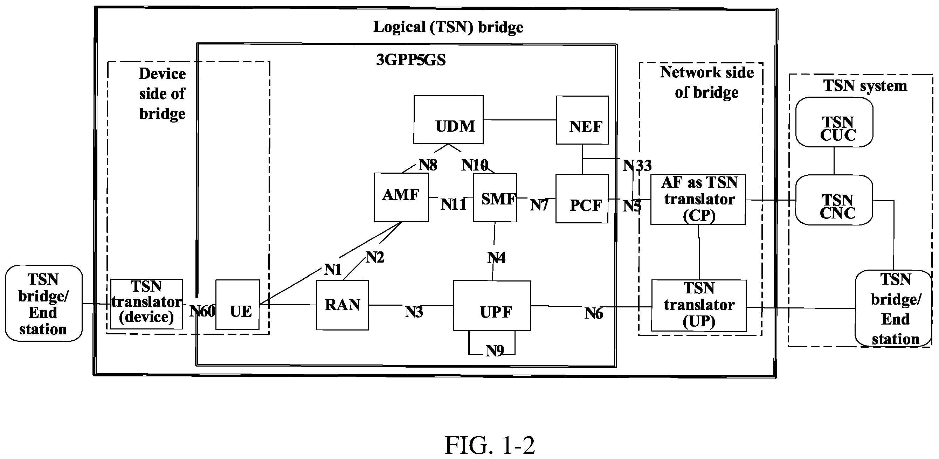

FIG. 1-1 is a first schematic diagram of architecture of a communication system according to an embodiment of the present application.

FIG. 1-2 is a schematic diagram of a TSN network architecture.

FIG. 2 is a first schematic flow chart of a resource configuration method according to an embodiment of the present application.

FIG. 3 is a second schematic flow chart of a resource configuration method according to an embodiment of the present application.

FIG. 4 is a third schematic flow chart of a resource configuration method according to an embodiment of the present application.

FIG. 5 is a fourth schematic flow chart of a resource configuration method according to an embodiment of the present application.

FIG. 6 is a fifth schematic flow chart of a resource configuration method according to an embodiment of the present application.

FIG. 7 is a schematic diagram of a structure of a terminal device according to an embodiment of the present application.

FIG. 8 is schematic diagram of a structure of a network device according to an embodiment of the present application.

FIG. 9 is a schematic diagram of structure of a communication device according to an embodiment of the present invention.

FIG. 10 is a schematic block diagram of a chip according to an embodiment of the present application.

FIG. 11 is a second schematic diagram of architecture of a communication system according to an embodiment of the present application.

Detailed Description

In order to be able to learn features and technical contents of embodiments of the present invention in more detail, implementation modes of the embodiments of the present invention will be described below with reference to accompanying drawings, and the accompanying drawings are used for reference only and are not used for limiting the embodiments of the present invention.

Technical solutions in embodiments of the present application will be described below with reference to the drawings in the embodiments of the present application. It is apparent that the embodiments described are just part embodiments of the present application, but not all embodiments of the present application. According to the embodiments of the present application, all other embodiments achieved by a person of ordinary skills in the art without paying an inventive effort are within the protection scope of the present application.

The technical solutions of the embodiments of the present application may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, an LTE Time Division Duplex (TDD) system, a Universal Mobile Telecommunication System (UMTS), a Worldwide Interoperability for Microwave Access (WiMAX) communication system, or a 5G system, etc.

Illustratively, a communication system 100 to which an embodiment of the present application may be applied is as shown in FIG. 1-1. The communication system 100 may include a network device 110, and the network device 110 may be a device that communicates with a terminal device 120 (or referred to as a communication terminal, or a terminal). The network device 110 may provide communication coverage for a specific geographical area, and may communicate with terminal devices located within the coverage area. Optionally, the network device 110 may be a Base Transceiver Station (BTS) in a GSM system or CDMA system, a NodeB (NB) in a WCDMA system, an Evolutional Node B (eNB or eNodeB) in a LTE system, or a radio controller in a Cloud Radio Access Network (CRAN), or the network device may be a network side device in a mobile switch center, a relay station, an access point, a vehicle-mounted device, a wearable device, a hub, a switch, a bridge, a router, or a network device in a 5G network, or a network device in a future evolved Public Land Mobile Network (PLMN), etc.

The communication system 100 also includes at least one terminal device 120 located within the coverage area of the network device 110. As used herein, the term "terminal device" includes, but not limited to, a device configured to receive/send a communication signal via a wired circuit, for example, via a Public Switched Telephone Network (PSTN), a Digital Subscriber Line (DSL), a digital cable, a direct cable; and/or another data connection/network; and/or via a wireless interface, for instance, for a cellular network, a Wireless Local Area Network (WLAN), a digital television network such as a Digital Video Broadcasting-Handheld (DVB-H) network, a satellite network, or an AM-FM broadcast transmitter; and/or another terminal device; and/or an Internet of Things (IoT) device. A terminal device configured to communicate via a wireless interface may be referred to as a "wireless communication terminal", a "wireless terminal" or a "mobile terminal". Examples of the mobile terminal include, but not limited to, a satellite or cellular telephone, a Personal Communication System (PCS) terminal capable of combining a cellular wireless telephone and data processing, faxing and data communication abilities, a Personal Digital Assistant (PDA) that may include a radio telephone, a pager, an internet/intranet access, a Web browser, a memo pad, a calendar, and/or a Global Positioning System (GPS) receiver, and a conventional laptop and/or palmtop receiver or other electronic apparatus including a radio telephone transceiver. The terminal device may be referred to as an access terminal, a User Equipment (UE), a subscriber unit, a subscriber station, a mobile station, a mobile platform, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device or a computing device with a wireless communication function, or other processing device connected to a wireless modem, a vehicle-mounted device, a wearable device, a terminal device in a 5G network, or a terminal device in a future evolved Public Land Mobile Network (PLMN), or the like.

Optionally, device to device (D2D) communication may be performed between the terminal devices 120.

Optionally, the 5G system or 5G network may be referred to as a New Radio (NR) system or a NR network.

FIG. 1 shows one network device and two terminal devices as an example. Optionally, the communication system 100 may include multiple network devices, and other quantities of terminal devices may be included within the coverage area of each network device, which is not limited in embodiments of the present application.

Optionally, the communication system 100 may include other network entities such as a network controller, and a mobile management entity, which are not limited in embodiments of the present application.

It should be understood that, a device with a communication function in a network/system in the embodiments of the present application may be referred to as a communication device. Taking the communication system 100 shown in FIG. 1 as an example, the communication devices may include a network device 110 and a terminal device 120 which have communication function, and the network device 110 and the terminal device 120 may be the specific devices described above, which will not be described here again. The communication device may also include other devices in the communication system 100, such as a network controller, a mobile management entity, and other network entities, which are not limited in the embodiments of the present application.

The embodiment of the present application is mainly used for a high reliability and low latency service, such as a TSN network service. With regard to the TSN network, a 5C network will serve as a TSN bridge (see FIG. 1-2), providing a service for the TSN network and services. An NR system needs to support data packets of Ethernet frame structure to be transmitted through a 5G network, at the same time, it also needs to ensure the QoS requirements in TR 22.804 to provide a higher reliability and lower latency guarantee. Meanwhile, it is also necessary to consider the requirement of high clock synchronization accuracy in TR 22.804, such as 1us. SA2 TR 22.804 makes related definitions for specific service characteristics and QoS requirements, and typical use cases and scenarios (see table 1) are written into TR 38.825.

Table 1

| Scenario | Terminal device | Effective communication service | Transmission period | Permitted end-to-end latency | Survival duration | Packet size | Service area | Service periodicity | Use scenario |
|---|---|---|---|---|---|---|---|---|---|
| I | 20 | 99,9999% to 99,999999% | 0.5 ms | ≤ transmission period | Transmission period | 50 bytes | 15 m x 15 m x 3 m | Period | Motion control and control to control scenario |
| II | 50 | 99,9999% to 99,999999% | 1 ms | ≤ transmission period | Transmission period | 40 bytes | 10 m x 5 m x 3 m | Period | Motion control and control to control scenario |
| III | 100 | 99,9999% to 99,999999% | 2 ms | ≤ transmission period | Transmission period | 20 bytes | 100 m ×100m x30m | Period | Motion control and control to control scenario |

It may be seen from the above table that TSN services are deterministic services, which have different requirements on period, latency and packet size, and packets are usually small, such as 20~50bytes. Requirements on latency and reliability are high, for example, ultra-high reliability (e.g., 99.999%) transmission is achieved in 1 ms.

In addition, the TSN network will also support smart grid and other services. Also because these services are deterministic periodic services, and in order to reduce PDCCH overhead, avoid the problem of PDCCH receiving reliability and PDCCH receiving power loss, semi-static scheduling may be used for resource scheduling or configuration transmission of such services, such as configured grant (CG)/ semi-persistent scheduling (SPS). However, it should be noted that the periods of these services are not times a symbol length or times a subframe length, which is inconsistent with the current SPS/CG allowed period values. For example, in a smart grid scenario, the period is 0.833ms or 16.667ms, and these two periods are not integral multiples of a symbol or a sub-frame. Therefore, it is necessary to consider how to support such type of TSN service.

The following are periods supported by an existing CG configuration:

    periodicity          ENUMERATED {

    sym2, sym7, sym1x14, sym2x14, sym4x14, sym5x14, sym8x14, sym10x14, sym16x14,

    sym20x14,

    sym32x14, sym40x14, sym64x14, sym80x14, sym128x14, sym160x14, sym256x14,

    sym320x14, sym512x14,

    sym640x14, sym1024x14, sym1280x14, sym2560x14, sym5120x14,

    sym6, sym1x12, sym2x12, sym4x12, sym5x12, sym8x12, sym10x12, sym16x12, sym20x12,

    sym32x12,

    sym40x12, sym64x12, sym80x12, sym128x12, sym160x12, sym256x12, sym320x12,

    sym512x12, sym640x12,

    sym1280x12, sym2560x12

              },

The following are periods supported by an existing SPS configuration:

SPS-Config ::=          SEQUENCE {

    periodicity          ENUMERATED {ms10, ms20, ms32, ms40, ms64, ms80, ms128, ms160,

ms320, ms640, spare6, spare5, spare4, spare3, spare2, spare1},

    nrofHARQ-Processes        INTEGER (1..8),

    n1PUCCH-AN        PUCCH-ResourceId        OPTIONAL -- Need M

}

It should be understood that the terms "system" and "network" are often used interchangeably here. The term "and/or" in this document is merely an association relationship describing associated objects, indicating that there may be three relationships, for example, A and/or B may indicate three cases: A alone, both of A and B, and B alone. In addition, the symbol "/" in this document generally indicates that objects before and after the symbol "/" have an "or" relationship.

In order to be able to learn features and technical contents of embodiments of the present invention in more detail, implementation modes of the embodiments of the present invention will be described below with reference to accompanying drawings, and the accompanying drawings are used for reference only and are not used for limiting the embodiments of the present invention.

Embodiment one

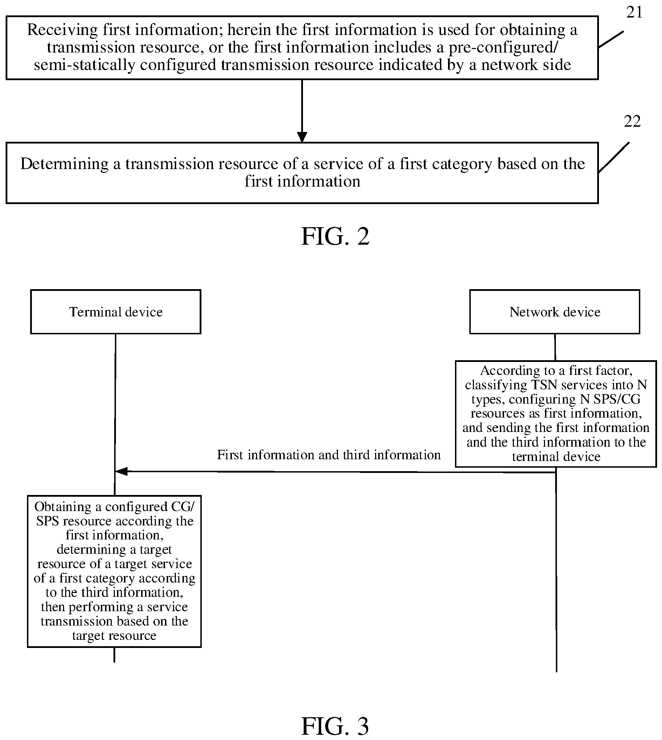

An embodiment of the present invention provides a resource configuration method, applied to a terminal device, as shown in FIG. 2. The resource configuration method includes acts 21 and 22.

In act 21: receiving first information; herein the first information is used for obtaining a transmission resource, or the first information includes a pre-configured/semi-statically configured transmission resource indicated by a network side.

In act 22: determining a transmission resource of a service of a first category based on the first information.

The transmission resource at least includes: a period and/or an offset of the service of the first category.

The service of the first category described in the present embodiment may be a service of a time sensitive network (TSN), a service of ultra-reliable and low latency communication (uRLLC), or a service of other networks, but the solution of the present embodiment is especially suitable for the service of TSN network.

The embodiment of the invention may be applied to the following scenarios: the current CG/SPS period cannot match a specific period of the service of the first category; a scenario where an arrival point or an offset of the service of the first category or a service transmission duration is not aligned with a 5G symbol; a scenario where a start point of a period of the service of the first category or a service period of the service of the first category is not aligned with a 5G symbol; and a scenario where the service of the first category is aperiodic, but an allowed time latency is great.

In a case of the service of the first category, such as a service of the TSN network, a service supporting a smart grid and the like, because these services are deterministic periodic services, and in order to reduce Physical Downlink Control Channel (PDCCH) overhead, avoid reliability problem of PDCCH reception and power loss of PDCCH reception, semi-static scheduling may be adopted for resource scheduling or configuration transmission of such services, such as the CG/SPS. However, it should be noted that periods of these services are not times a symbol length or times a subframe length, which are inconsistent with current SPS/CG allowed periods. For example, in a smart grid scenario, the period is 0.833ms or 16.667ms, and these two periods are not integral multiples of a symbol or a sub-frame. Therefore, a method of how to support configuring CG/SPS for this type of service is proposed, which has advantage of solving the problem of how to configure a CG/SPS period for this type of service, avoiding a problem of scattered pre-configuration of air interface resources when there are enormous amount of types of service and many period values, and a utilization rate of dynamic scheduling PDCCH resources being reduced.

In the embodiment, determining the transmission resource of the service of the first category may be understood as finally determining a reference time point, and/or transmission duration, and/or an offset, and/or a period of the transmission resource of the service of the first category.

In addition, position information of a time domain resource and/or position information of a frequency domain resource used in each period; or, time domain resource information and/or frequency domain resource information used in each period; or an offset position relative to a start point of each period, etc. may also be determined.

Below, solutions provided by the embodiment of the present application will be described in detail in combination with multiple scenarios.

Scenario one

The first information includes an extended configured grant (CG) and/or an extended semi-persistent scheduling (SPS) configuration.

That is to say, a value of the extended CG/SPS configuration is sent to the terminal device through the first information, enabling the terminal device to support all TSN service periods and offsets that need to be supported. That is to say, content such as a service period and/or offset of the service of the first category which is different from the existing CG/SPS configuration is added. For example, the period may be 0.833ms or 16.667 ms.

Scenario two

Based on scenario one, in this scenario, in addition to the extended configured grant (CG) and/or extended semi-persistent scheduling (SPS) configuration, the first information may also at least include at least one of following of at least one type of the service of the first category to be supported: a service period, a service offset, a service identification, a service priority, or a service category.

Scenario three

This scenario may be based on at least one of the above described scenario one and scenario two, and the terminal device can receive at least one group of CG/SPS resources configured by the network device.

Further, the terminal device can receive third information. Herein, the third information is used for indicating a target CG/SPS resource used in transmitting the service of the first category, and includes at least one of the following: an identification of the service of the first category, a priority of the service of the first category, a QoS identification, a CG/SPS period, an SPS resource identification, a CG resource identification, an identification associated with an SPS/CG resource, a resource usage priority, or a resource priority.

That is, the network device, such as a base station, determines the CG/SPS resource and/or the third information. Herein, the third information may be understood as a kind of association information, and the third information may be informed to the terminal device through a dedicated signaling.

It should be pointed out that the CG/SPS configuration referred to in this scenario may be a value of the extended CG/SPS configuration, the value of the extended CG/SPS configuration can support all TSN service periods and offsets that need to be supported. Accordingly, the target CG/SPS configuration may also be understood as one of multiple extended CG/SPS configurations. And the third information, that is, the association information indicates the CG/SPS resource used by the UE to transmit a service.

The method also includes transmitting and/or receiving a first service based on the target CG/SPS resource indicated in the third information.

The first service may be a currently arrived service in multiple services of the first category, or may be understood as a target service of the first category.

Specifically, when the first service arrives, the first service may be transmitted and/or received based on the target CG/SPS resource indicated in the third information.

When the first service arrives, the terminal device uses a corresponding associated CG resource to transmit the service, or receives the service on a corresponding associated SPS resource. The third information includes but is not limited to at least one of the following: service information, such as a service identification, a QoS identification, a priority identification of the service of the first category, a CG/SPS period, an SPS resource identification index, a CG resource index, or an identification associated with an SPS/CG resource.

For example, if a period of a service with service identification 1 is 16.667ms, the configured CG/SPS resource has index 1 and a period of 10ms, at the same time, the third information is indicated for association, which may include service identification 1, associated with the CG/SPS resource, or associated with index 1 or the period 10ms of the CG/SPS, the terminal device uses the CG/SPS resource to transmit service 1.

For another example, the terminal device selects an earliest available transmission resource within the period of 10ms of the CG/SPS after arrival time of service 1 for transmission. Specifically, it is assumed that the SPS period is 10ms, a reference time or offset is 1ms, a duration is 2 ms, and the service period is 16.667 ms, the UE transmits the TSN service by using transmission resources in the third period (time duration 31ms to 32ms) of the SPS with the semi-statically configured period of 10ms.

With this scenario, there is no need to break the existing CG/SPS period configuration /value taking principle, and the existing CG/SPS configuration is utilized as much as possible to achieve the service transmission.

Scenario four

The first information includes a CG/SPS resource period corresponding to each type of service of the first category of N types of service of the first category, N is an integer greater than or equal to 1.

The first information also includes at least one of the following: an identification of each type of service of the first category, a priority of each type of service of the first category, a respective identification of each type of service of the first category, or, a respective priority of each type of service of the first category. It should be understood that a category corresponding to the service of the first category may also be included.

Types of service of the first category are obtained by division based on a first factor. Herein, the first factor includes at least one of the following: a service period, latency, reliability, a reference time, a reference offset, a priority, or a specific identification.

According to the first factor, TSN services are classified into N types, and a CG/SPS period is configured for each type of TSN service. N is an integer greater than or equal to 1.

The first factor includes but is not limited to at least one of the following: a service period, latency, reliability, a reference time, a reference offset, a priority, or a specific identification. For example, different types of service of the first category may be divided according to different ranges of service period, and may also be divided according to priorities. For example, there are two kinds of priority, high priority and low priority, so two types of service of the first category may be divided. In addition, the aforementioned various factors may be used in combination. For example, after multiple types of service of the first category are divided based on specific identifications, further division may be made from each type of the multiple types of service of the first category based on reference offsets. More combination and processing modes will not be described here.

In this scenario, transmission resources of multiple types of service of the first category can be configured to the terminal device through the first information, such that when a first service arrives, the terminal device determines a corresponding transmission resource according to the first service, and uses the transmission resource for transmission.

This scenario can reduce scattered pre-configuration of air interface resources and avoid reducing a utilization rate of dynamic scheduling PDCCH resources.

The above described scenario three and scenario four can also be processed in combination. For example, resources of multiple types of service of the first category are configured through the first information, and then a target resource is indicated based on the third information, and the terminal device performs transmission based on an indication in the third information when a first service arrives. For example, FIG. 3 is taken for illustration, which includes:

according to a first factor, the network device classifies TSN services into N types, and configures N SPS/CG resources as the first information;

the network device sends the first information of the configured SPS/CG resources and the third information to the terminal device through a dedicated signaling, such as an RRC reconfiguration message; and

the terminal device performs service transmission according to the configured CG/SPS information and the third information. For example, when a first service arrives, the terminal device transmits the service using a corresponding associated CG resource, or receives the service on a corresponding associated SPS resource.

Scenario five

The first information is auxiliary information for obtaining a transmission resource. That is to say, in this scenario, a transmission resource or transmission resource pattern is calculated through the first information, and the transmission resource or transmission resource pattern to be used by the terminal device is finally determined.

Herein, the transmission resource is determined by the transmission resource pattern. The transmission resource pattern is used for indicating a pre-configured/semi-statically configured time domain resource and/or frequency domain resource, or the transmission resource pattern is used for determining a time domain resource and/or frequency domain resource for transmitting a first service. The first service may be one of services of the first category, which may be understood as a target service of the first category.

Determining the transmission resource for the service of the first category based on the first information includes: calculating a transmission resource pattern for the service of the first category according to the first information.

Herein the transmission resource pattern may represent an occupied time domain resource, and a position of the time domain resource is an integer multiple of P, P is a time length determined based on a service period and one symbol duration corresponding to sub-carrier spacing (SCS).

The method further includes:

receiving second information, herein the second information is used for determining an effective start time of the transmission resource; and

determining a usage start time of the transmission resource of the service of the first category based on the second information.

Further, the second information may also be used for determining an effective start time of the transmission resource pattern, that is, the effective start time of the transmission resource may be determined based on the effective start time of the transmission resource pattern. In this case, since the transmission resource pattern is used for determining the transmission resource, the effective start time of the transmission resource may be determined by determining the effective start time of the transmission resource pattern.

That is to say, in this scenario, in addition to sending the first information to the terminal device, enabling the terminal device to determine the transmission resource pattern, the second information can also be sent to the terminal device, and the usage start time of the transmission resource pattern or the transmission resource indicated by the network device for the terminal device is determined through the second information.

In this scenario, the first information includes at least one of the following: a service identification, a service period, a priority, a service duration, or, packet size; and/or,

the second information includes at least one of the following: a reference time point or an offset, or a usage indication identification.

Receiving the first information includes: receiving the first information through one of a Radio Resource Control (RRC) message, a Medium Access Control (MAC) Control Element (CE), and a physical layer signaling.

Receiving the second information includes: receiving the second information through one of an RRC message, a MAC CE and a physical layer signaling.

The method further includes:

receiving fourth information; herein, the fourth information is used for indicating a used or activated transmission resource pattern. The fourth information may be received through one of an RRC message, a MAC CE, or a physical layer signaling.

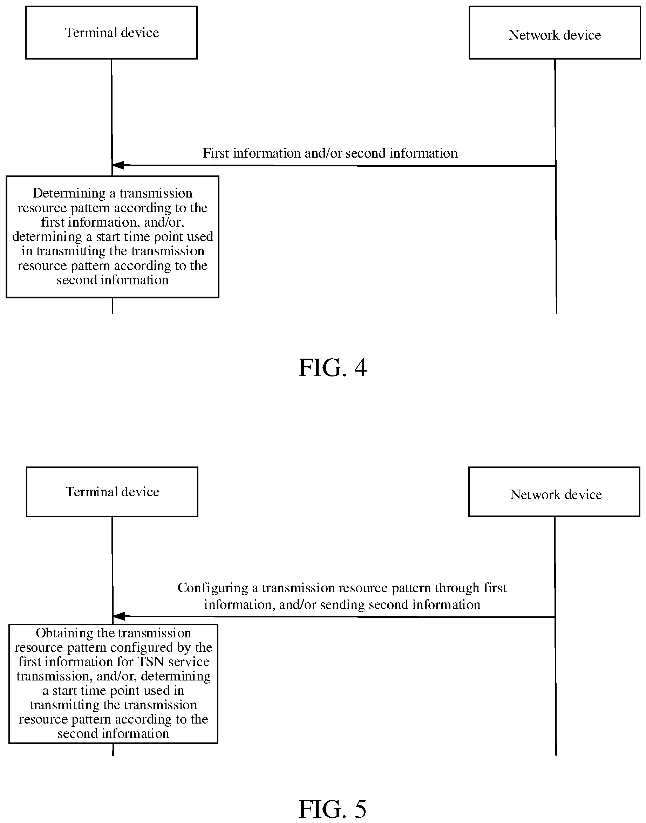

Below, description is made with reference to FIG. 4.

The network device informs the terminal device of the first information; herein, the first information is auxiliary information for the UE to obtain a transmission resource pattern. The terminal device may determine the transmission resource pattern according to the first information; herein, the transmission resource pattern is used for indicating a pre-configured /semi-statically configured time-frequency resource, or the transmission resource pattern is used for determining a time-domain resource and/or frequency-domain resource for transmitting the first service. And/or, the network device indicates an effective start time of the transmission resource pattern to the terminal device through the second information.

The terminal device calculates the transmission resource pattern through the first information.

The first information includes but is not limited to at least one of the following: a service identification, a service period, a service duration, a priority, or a packet size, and/or the second information includes but is not limited to at least one of the following: a reference time point or an offset, or a usage indication identification.

Herein, a first value used for representing an occupied time domain resource in the transmission resource pattern is an integer multiple of P, P is a time length determined based on a service period and one symbol duration of a corresponding SCS. For example, according to the service period, the terminal device determines the time domain resource set 1/occupied in the transmission resource pattern, the resource position is an integer value of P (rounded up, rounded down),

$$P= = \frac{X*N}{symbol}$$

.

Herein, X is the service period, N is an Nth period, and symbol represents the time length of one symbol under corresponding SCS.

For example, according to a service duration, the UE determines several consecutive time-frequency resources from beginning of a position of the integer value of P for transmitting a service and to be set 1. Optionally, a first position of the position of the integer value of P may be an offset position taking a position at which the first information is received as a reference point, an offset position relative to a first wireless frame in the system, or an offset position of a start point of a corresponding GPS clock. For example, the service transmission occupies one symbol, the first information is received in a first symbol of a first slot of wireless frame 3, and the calculated P is 3, which means that a third symbol or a fourth symbol is an available position of the transmission resource pattern.

Furthermore, the terminal device in this scenario may also determine a start time point of the transmission resource pattern according to the reference time point or offset in the second information.

In this scenario, the network device may also inform the terminal device of the currently used or activated transmission resource pattern through the fourth information which is sent through an RRC message, a MAC CE or a physical layer signaling. In this case, the terminal device may determine at least one transmission resource pattern according to the first information, and then which transmission resource pattern to be used or activated may be determined based on the fourth information of the network device.

That is to say, the terminal device determines which one or more of the multiple transmission resource patterns obtained by calculation is/are actually used through the fourth information.

It should be understood that when two transmission resource patterns partially overlap, the used transmission pattern is determined according to one of indication information of the base station, predefined information, or a user implementation.

In addition, it should be pointed out that the transmission resource pattern may be periodic or aperiodic.

Scenario six

In this scenario, the first information includes at least one group of transmission resource patterns indicated by the network side, the transmission resource pattern is used for indicating a pre-configured/semi-statically configured time domain resource and/or frequency domain resource, or the transmission resource pattern is used for determining a time domain resource and/or frequency domain resource for transmitting a first service.

That is to say, in this scenario, the terminal device will receive configured at least one group of transmission resources sent by the network device, such as at least one transmission resource pattern, and may also receive second information sent by the network device, and determine indicating activation or usage start time of a group of transmission resources based on the second information.

In addition, the method further includes:

receiving the fourth information; herein, the fourth information is used for indicating a used or activated transmission resource pattern.

In this scenario, the terminal device receives the first information sent by network device, and obtains configured at least one group of transmission resources, such as at least one transmission resource pattern, based on the first information; and/or receives the second information, and determines indicating activation or a usage start time of a group of transmission resources based on the second information. The terminal device may further receive the fourth information, and determine a currently activated or used target transmission resource or target transmission resource pattern based on the fourth information.

Different from scenario five, in this scenario, the transmission resource or transmission resource pattern configured by network device may be directly obtained in the first information; That is, calculation of resources is performed by the network device. The calculation mode is the same as scenario five, which will not be repeated here.

In this scenario, according to the first information, obtaining a transmission resource pattern, which is directly informed by the base station, as shown in FIG. 5, includes:
the network device configures a transmission resource pattern, the transmission resource pattern is used for indicating a pre-configured/semi-statically configured time-frequency resource or the transmission resource pattern is used for determining a time-domain resource and/or frequency-domain resource for transmitting the first service. Herein, the network device calculates the transmission resource pattern according to service information, such as a period. The calculation mode is the same as that in scenario five, which will not be described again.

For example, the period is 0.833ms, the symbol duration is 1/14ms, and the corresponding transmission pattern is: {0000000000000000000000000000000001}.

It should be pointed out that the transmission resource pattern may be periodic. It should be understood that a period of transmission resource pattern may also be determined according to an indication of the network device. Of course, the transmission resource pattern may also be aperiodic.

The network device, such as the base station, indicates the first information, such as the determined transmission resource pattern, to the terminal device through a dedicated signaling. The first information may be transmitted through at least one of an RRC message, a MAC CE, or a physical layer signaling.

The network device informs the terminal device of at least one group of transmission resource patterns through the first information.

For example, the network device indicates at least one transmission resource pattern to the terminal device through an RRC reconfiguration message or broadcast information, and then sends the fourth information through a MAC CE or a physical layer signaling, and informs currently used or activated one or more groups of transmission resource patterns through the fourth information.

An effective start time of the transmission resource may also be determined through the second information.

It should be understood that when two transmission resource patterns partially overlap, the used transmission pattern is determined according to one of indication information of the base station, predefined information, or user implementation.

The terminal device receives the transmission pattern configured by the network and transmits service data on the corresponding transmission pattern.

The terminal device determines a usage start time of the transmission resource pattern according to the second information.

According to the solution provided in this embodiment, the transmission resource of the service of the first category can be determined based on the first information sent by the network device, thus solving the problem that the current CG/SPS period cannot match the specific period of the service of the first category, and solving the problem of how to transmit the specific service of the first category and the problem of how to indicate/configure the resource for the service of the first category. In addition, the transmission resources can be determined through the first information, which ensures that the service of the first category can be transmitted in the case that the service arrival point or service transmission duration is not aligned with the start point of the 5G symbol, such that flexibility of TSN service resource allocation/scheduling/indication is increased, which is suitable for wider service scenarios.

Embodiment two

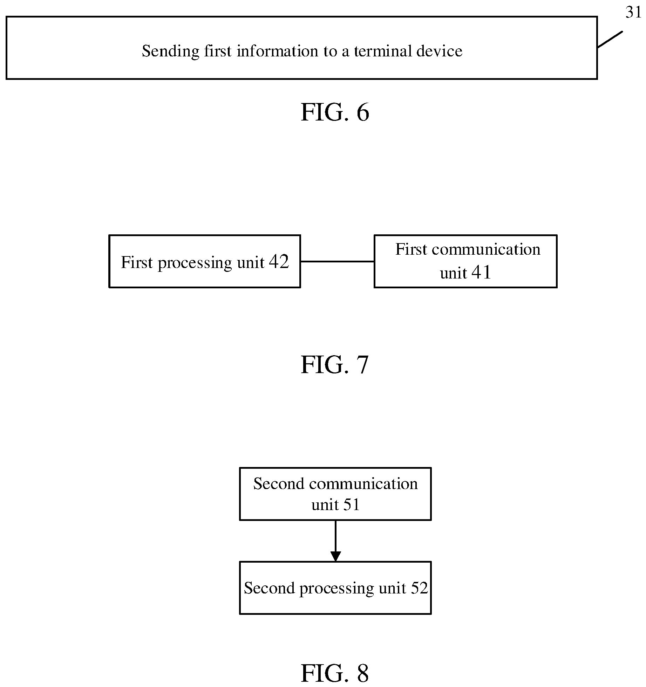

An embodiment of the present invention provides a resource configuration method, which is applied to a network device, and, as shown in FIG. 6, the method includes act 31.

In act 31: sending first indication information to a terminal device.

Herein, the first information is used for obtaining a transmission resource, or the first information includes a pre-configured/semi-statically configured transmission resource indicated by a network side.

In this embodiment, the transmission resource of a service of a first category may be understood as a reference time point, and/or transmission duration, and/or an offset, and/or a period, which finally determine the transmission resource of the service of the first category.

In addition, position information of a time domain resource and/or position information of frequency domain resource used in each period; or time domain resource information and/or frequency domain resource information used in each period; or an offset position relative to a start point of each period, etc. may also be determined..

Below, solutions provided by the embodiment will be described in combination with multiple scenarios.

Scenario one

The first information includes an extended configured grant (CG) and/or an extended semi-persistent scheduling (SPS) configuration.

That is to say, a value of the extended CG/SPS configuration is sent to the terminal device through the first information, enabling the terminal device to support all TSN service periods and offsets that need to be supported.

The first information is sent through one of an RRC message, a MAC CE, or physical layer signaling.

Scenario two

Based on scenario one, in this scenario, in addition to the extended configured grant (CG) and/or the extended semi-persistent scheduling (SPS) configuration, the first information may also at least include at least one of the following of at least one type of the service of the first category needed to be supported: a service period, a service offset, a service identification, a service priority, a service category,.

Scenario three

This scenario may be based on at least one of the above described scenario one and scenario two, and the first information includes at least one group of CG/SPS resources.

Further, sending third information; herein, the third information is used for indicating a target CG/SPS resource used for transmitting the service of the first category, and includes at least one of the following: an identification of the service of the first category, a priority of the service of the first category, a QoS identification, a CG/SPS period, an SPS resource identification, a CG resource identification, an identification associated with an SPS/CG resource, a resource usage priority, or a resource priority.

That is, the network device, such as a base station, determines the CG/SPS resource and/or the third information. Herein, the third information may be understood as a kind of association information, and the third information may be informed to the terminal device through a dedicated signaling.

It should be pointed out that the CG/SPS configuration referred to in this scenario may be a value of the extended CG/SPS configuration, and the value of the extended CG/SPS configuration can support all TSN service periods and offsets that need to be supported. Accordingly, the target CG/SPS configuration may also be understood as one of multiple extended CG/SPS configurations.

The third information, that is, the association information indicates a CG/SPS resource used by the terminal device for transmitting a service.

The method also includes: when a first service arrives, transmitting and/or receiving the first service based on the target CG/SPS resource indicated in the third information.

When the first service arrives, the terminal device uses the corresponding associated CG resource to transmit the service, or receives the service on the corresponding associated SPS resource. The third information includes but is not limited to at least one of the following: service information, such as a service identification, a QoS identification, a priority identification of the service of the first category, a CG/SPS period, a SPS resource index, a CG resource index, or an identification associated with an SPS/CG resource.

For example, if a period of a service with service identification 1 is 16.667ms, the configured CG/SPS resource has index 1 and a period of 10ms, and at the same time, the third information is indicated for association, which may include service identification 1, associated with a CG/SPS resource, or associated with index 1 or the period of 10ms of the CG/SPS, the terminal device uses the CG/SPS resource to transmit service 1.

For example, the terminal device selects an earliest available transmission resource within the period of 10ms of the CG/SPS after the arrival time of service 1 for transmission. Specifically, it is assumed that the period of the SPS is 10ms, a reference time or offset is 1ms, a duration is 2 ms, and the service period is 16.667 ms, the UE transmits the TSN service by using the transmission resources of the third period (time period 31ms to 32ms) of the SPS with the semi-statically configured period of 10 ms.

With this scenario, there is no need to break the existing CG/SPS period configuration/value taking principle, and the existing CG/SPS configuration is utilized as much as possible to achieve the service transmission.

Scenario four

The first information includes: a CG/SPS resource period corresponding to each type of service of the first category of N types of service of the first category, N is an integer greater than or equal to 1.

The first information also includes at least one of the following: an identification of each type of service of the first category, a priority of each type of service of the first category, a respective identification of each type of service of the first category, or, a respective priority of each type of service of the first category.

Types of service of the first category are obtained by division based on a first factor. Herein, the first factor includes at least one of the following: a service period, latency, reliability, a reference time, a reference offset, a priority, or a specific identification.

According to the first factor, TSN services are classified into N types, and a CG/SPS period is configured for each type of TSN service.

The first factor includes but is not limited to at least one of the following: a service period, latency, reliability, a reference time, a reference offset, a priority, or a specific identification.

In this scenario, transmission resources of multiple types of service of the first category may be configured to the terminal device through the first information, and then when a first service arrives, the terminal device determines a corresponding transmission resource according to the first service, and uses the transmission resource for transmission.

This scenario can reduce scattered pre-configuration of air interface resources and avoid reducing a utilization rate of dynamic scheduling PDCCH resources.

The above described scenario three and scenario four can also be processed in combination, for example, resources of multiple types of service of the first category are configured through the first information, then a target resource is indicated based on the third information, and the terminal device performs transmission based on the indication in the third information when the first service arrives. For example, FIG. 3 is taken for illustration, which includes:

according to a first factor, the network device classifies TSN services into N types, and configures N SPS/CG resources as the first information;

the network device sends the first information of the configured SPS/CG resources and the third information to the terminal device through a dedicated signaling, such as an RRC reconfiguration message; and

the terminal device performs service transmission according to the configured CG/SPS information and the third information. For example, when the first service arrives, the terminal device transmits the service using a corresponding associated CG resource or receives the service on a corresponding associated SPS resource.

Scenario five

The first information is auxiliary information for obtaining a transmission resource. That is to say, in this scenario, a transmission resource or transmission resource pattern is calculated through the first information, and the transmission resource or transmission resource pattern to be used by the terminal device is finally determined.

Herein, the transmission resource is determined by the transmission resource pattern. The transmission resource pattern is used for indicating a pre-configured/semi-statically configured time domain resource and/or frequency domain resource, or the transmission resource pattern is used for determining a time domain resource and/or a frequency domain resource for transmitting a first service.

Determining the transmission resource for the service of the first category based on the first information includes: calculating a transmission resource pattern for the service of the first category according to the first information.

Herein, the transmission resource pattern can represent an occupied time domain resource, and a position of the time domain resource is an integer multiple of P, P is a time length determined based on the service period and one symbol duration of corresponding SCS.

The method further includes:

sending second information, herein the second information is used for determining an effective start time of the transmission resource; and

determining a usage start time of transmission resource of the service of the first category based on the second information.

Further, the second information may also be used for determining an effective start time of the transmission resource pattern, that is, the effective start time of the transmission resource may be determined based on the effective start time of the transmission resource pattern.

That is to say, in this scenario, in addition to sending the first information to the terminal device, enabling the terminal device to determine the transmission resource pattern, the send second information can also be sent to the terminal device, and a usage start time of the transmission resource pattern or the transmission resource indicated by the network device for the terminal device is determined through the second information.

In this scenario, the first information includes at least one of the following: a service identification, a service period, a priority, or a service duration; and/or,

the second information includes at least one of the following: a reference time point or an offset, or a usage indication identification.

Receiving the first information includes: receiving the first information through one of an RRC message, a MAC CE, or a physical layer signaling.

Receiving the second information includes: receiving the second information through one of an RRC message, a MAC CE, or a physical layer signaling.

The method further comprises:

sending fourth information, herein the fourth information is used for indicating a used or activated transmission resource pattern. The fourth information may be sent through one of an RRC message, a MAC CE, or a physical layer signaling.

Scenario six

In this scenario, the first information includes at least one group of transmission resource patterns indicated by the network side, the transmission resource pattern is used for indicating a pre-configured/semi-statically configured time domain resource and/or frequency domain resource, or the transmission resource pattern is used for determining a time domain resource and/or frequency domain resource for transmitting a first service.

That is to say, in this scenario, configured at least one group of transmission resources sent by the network device will be received, such as at least one transmission resource pattern, and the second information sent by the network device may also be received, and indicating activation or a usage start time of a group of transmission resources is determined based on the second information.

The method further includes:

sending the fourth information. Herein, the fourth information is used for indicating a used or activated transmission resource pattern.

In this scenario, the terminal device receives the first information sent by the network device, and obtains configured at least one group of transmission resources, such as at least one transmission resource pattern, based on the first information; and/or received the second information, and determines indicating activation or a usage start time of a group of transmission resources based on the second information. The terminal device may further receive the fourth information, and determine the currently activated or used target transmission resource or target transmission resource pattern based on the fourth information.

Different from scenario five, in this scenario, the transmission resource or transmission resource pattern configured by network device may be directly obtained in the first information. That is, calculation of resources is performed by the network device. The calculation mode is the same as scenario five, which will not be repeated here.

In this scenario, according to the first information, obtaining the transmission resource pattern the transmission resource pattern is directly informed by the base station, as shown in FIG. 5, which includes:

the network device configures a transmission resource pattern, the transmission resource pattern is used for indicating a pre-configured/semi-statically configured time-frequency resource. Herein, the network device calculates the transmission resource pattern according to service information, such as a period. The calculation mode is the same as that in scenario five, which will not be described again.

For example, the period is 0.833ms, the symbol duration is 1/14ms, and the corresponding transmission pattern is: {000000000000000000000000000000000001}

It should be pointed out that the transmission resource pattern may be periodic. It should be understood that the period of transmission resource pattern may also be determined according to an indication of network device. Of course, the transmission resource pattern may also be aperiodic.

The terminal device indicates the first information, such as the determined transmission resource pattern, to the terminal device through a dedicated signaling. The first information may be transmitted through at least one of an RRC message, a MAC CE, or a physical layer signaling.

The network device informs the terminal device of at least one group of transmission resource patterns through the first information.

For example, the network device indicates at least one transmission resource pattern to the terminal device through an RRC reconfiguration message or broadcast information, then sends fourth information through a MAC CE or a physical layer signaling, and informs currently used or activated one or more groups of transmission resource patterns through the fourth information.

The effective start time of the transmission resource pattern may also be determined through the second information.

It should be understood that when two transmission resource patterns partially overlap, the used transmission pattern is determined according to one of indication information of the base station, or predefined information.

The terminal device receives the transmission pattern configured by the network and transmits service data in the corresponding transmission pattern.

The terminal device determines a usage start time of the transmission resource pattern according to the second information.

According to the solution provided in this embodiment, the transmission resource of the service of the first category can be determined through above described multiple scenarios, herein the transmission resource at least includes the period and/or offset of the transmission resource, thus solving the problem that the current CG/SPS period cannot match the specific period of the service of the first category, and the problem of how to indicate/configure the resource for the service of the first category. In addition, by indicating the period and/or offset of the transmission resource, the problem that the arrival or period of the service of the first category is not aligned with the start point is solved, such that the flexibility of TSN service resource allocation/scheduling/indication is increased, which is suitable for wider service scenarios.

Embodiment three

An embodiment of the present invention provides a terminal device, as shown in FIG. 7. The terminal device includes a first communication unit 41 and a first processing unit 42.

The first communication unit 41 is configured to receive first information; herein the first information is used for obtaining a transmission resource, or the first information includes a pre-configured/semi-statically configured transmission resource indicated by a network side.

The first processing unit 42 is configured to determine a transmission resource for a service of a first category based on the first information.

The transmission resource at least includes: a period and/or an offset of the service of the first category.

In this embodiment, determining the transmission resource of the service of the first category may be understood as finally determining a reference time point, and/or transmission duration, and/or an offset, and/or a period of the transmission resource of the service of the first category.

In addition, position information of a time domain resource and/or position information of frequency domain resource used in each period; or, time domain resource information and/or frequency domain resource information used in each period; or an offset position relative to a start point of each period, etc. also may be determined.

Below, solutions provided by the embodiment will be described in combination with multiple scenarios as below.

Scenario one

The first information includes: an extended configured grant (CG) and/or an extended semi-persistent scheduling (SPS) configuration.

That is to say, a value of the extended CG/SPS configuration is sent to the terminal device through the first information, enabling the terminal device to support all TSN service periods and offset that need to be supported.

Scenario two

Based on scenario one, in this scenario, in addition to the extended configured grant (CG) and/or extended semi-persistent scheduling (SPS) configuration, the first information may also at least include at least one of the following of at least one type of the service of the first category to be supported: a service period, a service offset, a service identification, a service priority, a service category,.

Scenario three

This scenario may be based on at least one of the described scenario one and scenario two, and the terminal device can receive at least one group of CG/SPS resources configured by the network device.

Further, the terminal device can receive third information. Herein, the third information is used for indicating a target CG/SPS resource used in transmitting the service of the first category, and includes at least one of the following: an identification of the service of the first category, a priority of the service of the first category, a QoS identification, a CG/SPS period, a SPS resource identification, a CG resource identification, an identification associated with an SPS/CG resources, a resource usage priority, or, a resource priority.

That is, the network device, such as a base station, determines the CG/SPS resource and/or the third information. Herein, the third information may be understood as a kind of association information, and the third information may be informed to the terminal device through a dedicated signaling.

It should be pointed out that the CG/SPS configuration referred to in this scenario may be a value of the extended CG/SPS configuration, the value of the extended CG/SPS configuration can support all TSN service periods and offset that need to be supported. Accordingly, the target CG/SPS configuration may also be understood as one of multiple extended CG/SPS configurations.

The third information, that is, the association information indicates the CG/SPS resource used by the UE to transmit a service.

The first processing unit is configured to transmit and/or receive a first service based on the target CG/SPS resource indicated in the third information.

Herein, the first service may be a currently arrived service of multiple services of the first category, or may be understood as a target service of the first category.

Specifically, when the first service arrives, the first processing unit transmits and/or receives the first service based on the target CG/SPS resource indicated in the third information.

When the first service arrives, the terminal device uses a corresponding associated CG resource to transmit the service, or receives the service on a corresponding associated SPS resource. The third information includes but is not limited to at least one of the following: service information, such as a service identification, a QoS identification, a priority identification of service of the first category, a CG/SPS period, an SPS resource index, a CG resource index, or an identification associated with an SPS/CG resource.

For example, if a period of a service with service identification 1 is 16.667ms, the configured CG/SPS resource has index 1 and a period of 10ms, and at the same time, the third information is indicated for association, which may include service identification 1, associated with the CG/SPS resource, or associated with index 1 or the period of 10ms of the CG/SPS, the terminal device uses the CG/SPS resource to transmit service 1.

For another example, the terminal device selects an earliest available transmission resource within the period of 10ms of the CG/SPS after arrival time of service 1 for transmission. Specifically, it is assumed that the period of the SPS is 10ms, a reference time or offset is 1 ms, a duration is 2 ms, and the service period is 16.667 ms, the UE transmits the TSN service by using transmission resources in the third period (time period 31ms to 32ms) of the SPS with the semi-statically configured period of 10 ms.

With this scenario, there is no need to break the existing CG/SPS period configuration/value taking principle, and the existing CG/SPS configuration is utilized as much as possible to achieve the service transmission.

Scenario four

The first information includes: a CG/SPS resource period corresponding to each type of service of the first category of N types of service of the first category, N is an integer greater than or equal to 1.

The first information also includes at least one of the following: an identification of each type of service of the first category, a priority of each type of service of the first category, a respective identification of each type of service of the first category, or a respective priority of each type of service of the first category.

Types of service of the first category are obtained by division based on a first factor. Herein, the first factors include at least one of the following: a service period, latency, reliability, a reference time, a reference offset, a priority, or a specific identification.

According to the first factor, TSN services are classified into N types, and a CG/SPS period is configured for each type of TSN service.

The first factor includes but is not limited to at least one of the following: a service period, latency, reliability, a reference time, a reference offset, a priority, or a specific identification.

In this scenario, transmission resources of multiple types of service of the first category can be configured to the terminal device through the first information, such that when a first service arrives, the terminal device determines a corresponding transmission resource according to the first service, and uses the transmission resource for transmission.

This scenario can reduce scattered pre-configuration of air interface resources and avoid reducing a utilization rate of dynamic scheduling PDCCH resources.

Scenario five

The first information is auxiliary information for obtaining a transmission resource. That is to say, in this scenario, the transmission resource or transmission resource pattern is calculated through the first information, and the transmission resource or transmission resource pattern to be used by the terminal device is finally determined.

Herein, the transmission resource is determined through the transmission resource pattern. The transmission resource pattern is used for indicating a pre-configured/semi-statically configured time domain resource and/or frequency domain resource, or the transmission resource pattern is used for determining a time domain resource and/or frequency

domain resource for transmitting a first service. The first service may be one of services of the first category, which may be understood as a target service of the first category.

The first processing unit 42 calculates a transmission resource pattern for the service of the first category according to the first information.

Herein, the transmission resource pattern can represent an occupied time domain resource, and a position of the time domain resource is an integer multiple of P, P is a time length determined based on the service period and one symbol duration corresponding to SCS.

The first communication unit 41 receives second information. Herein, the second information is used for determining effective start time of the transmission resource.

The first processing unit 42 determines a usage start time of the transmission resource of the service of the first category based on the second information.

Further, the second information may also be used for determining effective start time of the transmission resource pattern, that is, the effective start time of the transmission resource may be determined based on the effective start time of the transmission resource pattern. In this case, since the transmission resource pattern is used for determining the transmission resource, the effective start time of the transmission resource can be determined by determining the effective start time of the transmission resource pattern.

That is to say, in this scenario, in addition to sending the first information to the terminal device, enabling the terminal device to determine the transmission resource pattern, the second information can also be sent to the terminal device, and the usage start time of the transmission resource pattern or the transmission resource indicated by the network device for the terminal device is determined through the second information.

In this scenario, the first information includes at least one of the following: a service identification, a service period, a priority, a service duration, or a packet size; and/or,

the second information includes at least one of the following: a reference time point or an offset, or a usage indication identification.

Receiving of the first information includes: receiving the first information through one of an RRC message, a MAC CE, or a physical layer signaling.

Receiving the second information includes: receiving the second information through one of an RRC message, a MAC CE, or a physical layer signaling.

The method further includes:

receiving fourth information, herein the fourth information is used for indicating a used or activated transmission resource pattern.

Scenario six

In this scenario, the first information includes at least one group of transmission resource patterns indicated by the network side, the transmission resource pattern is used for indicating a pre-configured/semi-statically configured time domain resource and/or frequency domain resource, or the transmission resource pattern is used for determining a time domain resource and/or frequency domain resource for transmitting a first service.

That is to say, in this scenario, configured at least one group of transmission resources sent by the network device will be received, such as at least one transmission resource pattern, and the second information sent by the network device also may be received, and indicating activation or a usage start time of a group of transmission resources is determined based on the second information.

In addition, the first communication unit 41 receives the fourth information, herein the fourth information is used for indicating a used or activated transmission resource pattern.

In this scenario, the first communication unit 41 receives the first information sent by network device, obtains configured at least one group of transmission resources based on the first information, such as at least one transmission resource pattern; and/or receives the second information, determines indicating activation or a usage start time of a group of transmission resources based on the second information. The first communication unit 41 may further receive the fourth information, and determine the currently activated or used target transmission resource or the target transmission resource pattern based on the fourth information.

Different from scenario five, in this scenario, the transmission resource or transmission resource pattern configured by the network device may be directly obtained in the first information. That is, calculation of resources is performed by the network device. The calculation mode is the same as scenario five, which will not be repeated here.

The solution provided in this embodiment corresponds to the method in embodiment one, and specific functions of each unit are the same as those in embodiment one, which will not be described again.

According to the solution provided in this embodiment, the transmission resource of the service of the first category can be determined through the above described multiple scenarios, herein the transmission resource at least include the period and/or offset of the transmission resource, thus solving the problem that the current CG/SPS period cannot match the specific period of the service of the first category, and the problem of how to indicate/configure the resource for the service of the first category. In addition, by indicating the period or offset of the transmission resource, the problem that the arrival and/or period of the service of the first category is not aligned with the start point is solved, such that flexibility of allocation/scheduling/indication of the TSN service resource is increased, which is suitable for wider service scenarios.

Embodiment four

An embodiment of the present invention provides a network device, as shown in FIG. 8. The network device includes a second communication unit 51.

The second communication unit 51 is configured to send first information to a terminal device.

Herein, the first information is used for obtaining a transmission resource, or the first information includes a pre-configured/semi-statically configured transmission resource indicated by the network side.

In this embodiment, the transmission resource of a service of a first category may be understood as a reference time point, and/or transmission duration, and/or an offset, and/or a period, which finally determines the transmission resource of the service of the first category.

In addition, position information of a time domain resource and/or position information of frequency domain resource used in each period; or time domain resource information and/or frequency domain resource information used in each period; or an offset position relative to a start point of each period, etc. may also be determined.

Below, solutions provided by embodiment of the present application will be described specifically in combination with multiple scenarios.

Scenario one

The first information includes an extended configured grant (CG) and/or an extended semi-persistent scheduling (SPS) configuration.

That is to say, a value of the extended CG/SPS configuration is sent to the terminal device through the first information, enabling the terminal device to support all TSN service periods and offset that need to be supported.

The second communication unit 51 sends the first information through one of an RRC message, a MAC CE, or a physical layer signaling.

Scenario two

Based on scenario one, in this scenario, in addition to the extended configured grant (CG) and/or extended semi-persistent scheduling (SPS) configuration, the first information may also at least include at least one of the following of at least one type of the service of the first category to be supported: a service period, a service offset, a service identification, a service priority, or a service category.

Scenario three

This scenario may be based on at least one of the above described scenario one and scenario two, and the first information includes at least one group of CG/SPS resources.

Further, the second communication unit 51 sends third information, herein, the third information is used for indicating a target CG/SPS resource used in transmitting the service of the first category, and includes at least one of the following: an identification of the service of the first category, a QoS identification, a CG/SPS period, an SPS resource identification, a CG resource identification, an identification associated with an SPS/CG resource, a resource usage priority or, a resource priority.

That is, the network device, such as a base station, determines the CG/SPS resource and/or the third information. Herein, the third information may be understood as a type of association information, and the third information may be informed to the terminal device through a dedicated signaling.

The third information, that is, the association information indicates a CG/SPS resource used by the terminal device for transmitting a service.

With this scenario, there is no need to break the existing CG/SPS period configuration/value taking principle, and the existing CG/SPS configuration is utilized as much as possible to achieve the service transmission.

Scenario four

The first information includes a CG/SPS resource period corresponding to each type of service of the first category of N types of service of the first category, N is an integer greater than or equal to 1.

The first information also includes at least one of the following: an identification of each type of service of the first category, a priority of each type of service of the first category, a respective identification of each type of service of the first category, or a respective priority of each type of service of the first category.

Types of service of the first category are obtained by division based on a first factor. Herein, the first factors include at least one of the following: a service period, latency, reliability, a reference time, a reference offset, a priority, or, a specific identification.

According to the first factor, TSN services are classified into N types, and a CG/SPS period is configured for each type of TSN services.

The first factor includes but is not limited to at least one of the following: a service period, latency, reliability, a reference time, a reference offset, a priority, or a specific identification.

In this scenario, transmission resources of multiple types of service of the first category may be configured to the terminal device through the first information, and then when a first service arrives, the terminal device determines a corresponding transmission resource according to the first service, and uses the transmission resource for transmission.

This scenario can reduce scattered pre-configuration of air interface resources and avoid reducing a utilization rate of dynamic scheduling PDCCH resources.

The above described scenario three and scenario four can also be processed in combination, for example, resources of multiple types of service of the first category are configured through the first information, then a target resource is indicated based on the third information, and the terminal device performs transmission based on the indication in the third information when the first service arrives. For example, FIG. 3 is taken for illustration, which includes:

according to a first factor, the network device classifies TSN services into N types, and configures N SPS/CG resources as the first information;
the network device sends the first information of the configured SPS/CG resources and the third information to the terminal device through a dedicated signaling, such as an RRC reconfiguration message; and
the terminal device performs service transmission according to the configured CG/SPS information and the third information. For example, when the first service arrives, the terminal device transmits the service using a corresponding associated CG resource or receives the service on a corresponding associated SPS resource.

Scenario five

The first information is auxiliary information for obtaining a transmission resource. That is to say, in this scenario, the transmission resource or transmission resource pattern is calculated through the first information, and the transmission resource or transmission resource pattern to be used by the terminal device is finally determined.

Herein, the transmission resource is determined by the transmission resource pattern. The transmission resource pattern is used for indicating a pre-configured/semi-statically configured time domain resource and/or frequency domain resource, or the transmission resource pattern is used for determining a time domain resource and/or frequency domain resource for transmitting a first service.

Determining the transmission resource for the service of the first category based on the first information includes: calculating a transmission resource pattern for the service of the first category according to the first information.

Herein, a first value used for representing an occupied time domain resource in the transmission resource pattern is an integer multiple of P, P is a time length based on the service period and one symbol duration corresponding to SCS.

The second communication unit 51 sends second information, herein the second information is used for determining effective start time of the transmission resource.

Further, the second information may also be used for determining effective start time of the transmission resource pattern, that is, the effective start time of the transmission resource may be determined based on the effective start time of the transmission resource pattern.

That is to say, in this scenario, in addition to sending the first information to the terminal device, enabling the terminal device to determine the transmission resource pattern, the second information can also be sent to the terminal device, and a usage start time of the transmission resource or the transmission resource pattern indicated by the network device for the terminal device may be determined through the second information.

In this scenario, the first information includes at least one of the following: a service identification, a service period, a priority, or a service duration; and/or,

the second information includes at least one of the following: a reference time point or an offset, or a usage indication identification.

The second communication unit sends the first information through one of an RRC message, a MAC CE, a physical layer signaling.

The second communication unit sends the second information through one of an RRC message, a MAC CE, or a physical layer signaling.

The second communication unit transmits fourth information, herein the fourth information is used for indicating a used or activated transmission resource pattern.

Scenario six

In this scenario, the first information includes at least one group of transmission resource patterns indicated by the network side. The transmission resource pattern is used for indicating a pre-configured/semi-statically configured time domain resource and/or frequency domain resource, or the transmission resource pattern is used for determining a time domain resource and/or frequency domain resource for transmitting a first service.

That is to say, in this scenario, configured at least one group of transmission resources sent by the network device will be received, such as at least one transmission resource pattern, and the second information sent by the network device may also be received, and indicating activation or a usage start time of a group of transmission resources is determined based on the second information.

In addition, the second communication unit 51 sends fourth information. Herein, the fourth information is used for indicating a used or activated transmission resource pattern.

In this scenario, first information sent by network device is received, and configured at least one group of transmission resources, such as at least one transmission resource pattern, is obtained based on the first information, and/or the second information is received, and indicating activation or a usage start time of a group of transmission resources is determined based on the second information. Further, the fourth information may be received, and the currently activated or used target transmission resource or target transmission resource pattern may be determined based on the fourth information.

Different from scenario five, in this scenario, the transmission resource or transmission resource pattern configured by network device may be directly obtained in the first information. That is, calculation of resources is performed by the network device. The calculation mode is the same as scenario five, which will not be repeated here.

The network device also includes a second processing unit 52, the second processing unit calculates the transmission resource pattern according to service information, such as a period, and the calculation mode is the same as that in scenario five, which will not be described again. The transmission resource pattern can represent an occupied time domain resource, and the position of the time domain resource is an integer multiple of P. P is a time length determined based on the service period and one symbol duration corresponding to SCS.

For example, the period is 0.833ms, the symbol duration is 1/14ms, and the corresponding transmission pattern is {000000000000000000000000000000000001}.

It should be pointed out that the transmission resource pattern may be periodic. It should be understood that the period of transmission resource pattern may also be determined according to an indication of the network device. Of course, the transmission resource pattern may also be aperiodic.

The terminal device indicates the first information, such as the determined transmission resource pattern, to the terminal device through a dedicated signaling. The first information may be at least one of an RRC message, a MAC CE, or a physical layer signaling for transmission.

The network device informs the terminal device of at least one group of transmission resource patterns through the first information.

For example, the network device indicates at least one transmission resource pattern to the terminal device through an RRC reconfiguration message or broadcast information, then sends fourth information through a MAC CE or a physical layer signaling, and informs currently used or activated one or more groups of transmission resource patterns through the fourth information.

It should be understood that when two transmission resource patterns partially overlap, the used transmission pattern is determined according to one of indication information of the base station, or predefined information.

According to the solution provided in this embodiment, the transmission resource of the service of the first category can be determined through above described multiple scenarios, herein the transmission resource at least includes the period and/or offset of the transmission resource, thus solving the problem that the current CG/SPS period cannot match the specific period of the service of the first category, and the problem of how to indicate/configure the resource for the service of the first category. In addition, by indicating the period or offset of the transmission resource, the problem that the arrival and/or period of the service of the first category is not aligned with the start point is solved, such that flexibility of TSN service resource allocation/scheduling/indication is increased, which is suitable for wider service scenarios.

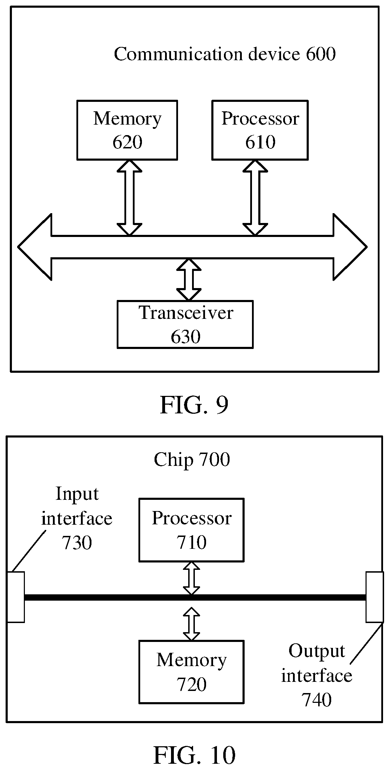

FIG. 9 is a schematic diagram of structure of a communication device 600 according to an embodiment of the present application. The communication device may be the terminal device or the network device aforementioned in the embodiments. The communication device 600 shown in FIG. 9 includes a processor 610. The processor 610 may call and run a computer program from a memory to implement the methods according to the embodiments of the present application.

Optionally, as shown in FIG. 9, the communication device 600 may further include a memory 620. The processor 610 may call and run a computer program from the memory 620 to implement the methods in the embodiments of the present application.

The memory 620 may be a separate device independent of the processor 610 or may be integrated in the processor 610.

Optionally, as shown in FIG. 9, the communication device 600 may further include a transceiver 630. The processor 610 may control the transceiver 630 to communicate with other devices. Specifically, the transceiver 730 may send information or data to other devices or receive information or data sent by other devices.

The transceiver 630 may include a transmitter and a receiver. The transceiver 630 may further include an antenna, and a quantity of antennas may be one or more.

Optionally, the communication device 600 may be specifically a network device of an embodiment of the present application, and the communication device 600 may implement the corresponding processes implemented by the network device in various methods of the embodiments of the present application, which will not be repeated here for brevity.

Optionally, the communication device 600 may be specifically a terminal device or a network device of an embodiment of the present application, and the communication device 600 may implement the corresponding processes implemented by the mobile terminal/terminal device in various methods of the embodiments of the present application, which will not be repeated here again for brevity.

FIG. 10 is a schematic diagram of structure of a chip of an embodiment of the present application. A chip 700 shown in FIG. 10 includes a processor 710. The processor 710 may call and run a computer program from a memory to implement the methods in the embodiments of the present application.

Optionally, as shown in FIG. 10, the chip 700 may further include a memory 720. The processor 710 may call and run a computer program from the memory 720 to implement the methods in the embodiments of the present application.

The memory 720 may be a separate device independent of the processor 710 or may be integrated in the processor 710.

Optionally, the chip 700 may further include an input interface 730. The processor 710 may control the input interface 730 to communicate with other devices or chips, and specifically, may obtain information or data sent by other devices or chips.

Optionally, the chip 700 may further include an output interface 740. The processor 710 may control the output interface 740 to communicate with other devices or chips, and specifically, may output information or data to other devices or chips.

Optionally, the chip may be applied to a network device in an embodiment of the present application, and the chip may implement the corresponding processes implemented by the network device in various methods of the embodiments of the present application, which will not be repeated here for brevity.

Optionally, the chip may be applied to a terminal device in an embodiment of the present application, and the chip may implement the corresponding processes implemented by the terminal device in various methods of the embodiments of the present application, which is not repeated here again for the sake of brevity.

It should be understood that the chip mentioned in the embodiments of the present application may be referred to as a system-level chip, a system chip, a chip system or a system-on-chip, etc.

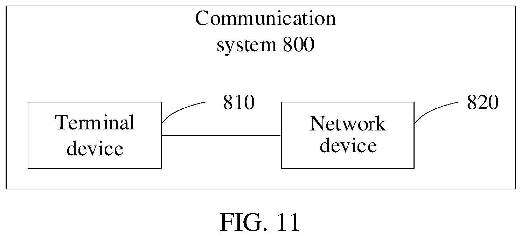

FIG. 11 is a schematic block diagram of a communication system 800 according to an embodiment of the present application. As shown in FIG. 11, the communication system 800 may include a terminal device 810 and a network device 820.

Herein, the terminal device 810 may be configured to implement corresponding functions implemented by the terminal device in the above-mentioned methods, and the network device 820 may be configured to implement corresponding functions implemented by the network device in the above-mentioned methods, which will not be repeated here for brevity.

It should be understood that the processor in the embodiments of the present application may be an integrated circuit chip having a signal processing capability. In an implementation process, the acts of the foregoing method embodiments may be implemented by an integrated logic circuit of hardware in the processor or instructions in a form of software. The processor may be a general purpose processor, a Digital Signal Processor (DSP), an Application Specific Integrated Circuit (ASIC), a Field Programmable Gate Array (FPGA) or other programmable logic devices, a discrete gate or a transistor logic device, or a discrete hardware component. The processor may implement or perform various methods, steps and logical block diagrams disclosed in the embodiments of the present application. The general purpose processor may be a microprocessor, or the processor may be any conventional processor or the like. The acts of the methods disclosed in combination with the embodiments of the present application may be directly embodied to be implemented by a hardware decoding processor, or may be implemented by a combination of hardware and software modules in the decoding processor. The software modules may be located in a storage medium commonly used in the art, such as a random access memory, a flash memory, a read-only memory, a programmable read-only memory or an electrically erasable programmable memory, or a register. The storage medium is located in a memory, and the processor reads the information in the memory and completes the acts of the above methods in combination with its hardware.

It may be understood that the memory in the embodiments of the present application may be a volatile memory or a non-volatile memory, or may include both a volatile memory and a non-volatile memory. The non-transitory memory may be a Read-Only Memory (ROM), a Programmable ROM (PROM), an Erasable PROM (EPROM), an Electrically EPROM (EEPROM), or a flash memory. The volatile memory may be a Random Access Memory (RAM) which serves as an external cache. By way of exemplary but not restrictive illustrations, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory in the systems and methods described here is intended to include, without being limited to, these and any other suitable types of memory.

It should be understood that the foregoing memory is an example for illustration, but not for limiting. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a Direct Rambus RAM (DR RAM), or the like. That is, memories in the embodiments of the present application are intended to include, without being limited to, these and any other suitable types of memories.

An embodiment of the present application further provides a computer readable storage medium configured to store a computer program.

Optionally, the computer readable storage medium may be applied to a network device in an embodiment of the present application, and the computer program is run on a computer, the computer is enabled to perform the corresponding processes implemented by the network device in various methods of the embodiments of the present application, which will not be repeated here for brevity.

Optionally, the computer readable storage medium may be applied in a terminal device of the embodiments of the present application, and when the computer program is run on a computer, the computer is enabled to perform corresponding processes implemented by the mobile terminal/terminal device in various methods of the embodiments of the present application, which will not be repeated here for brevity.

An embodiment of the present application also provides a computer program product including computer program instructions.

Optionally, the computer program product may be applied to a network device in an embodiment of the present application, and the computer program instructions are executed by a computer, the computer is enabled to perform the corresponding processes implemented by the network device in various methods of the embodiments of the present application, which will not be repeated here for brevity.

Optionally, the computer program product may be applied to a mobile terminal/terminal device in an embodiment of the present application, and the computer program instructions are executed by a computer, the computer is enabled to perform the corresponding processes implemented by the mobile terminal/terminal device in various methods of the embodiments of the present application, which will not be repeated here for brevity.

An embodiment of the present application also provides a computer program.

Optionally, the computer program may be applied to the network device of the embodiments of the present application. When the computer program is run on a computer, the computer is enabled to perform corresponding processes implemented by the network device in various methods of the embodiments of the present application, which will not be repeated here for brevity.

Optionally, the computer program may be applied to a mobile terminal/terminal device in an embodiment of the present application. When the computer program is run on a computer, the computer is enabled to perform the corresponding processes implemented by the mobile terminal/terminal device in various methods of the embodiments of the present application, which will not be repeated here for brevity.

Those of ordinary skills in the art may recognize that the example units and algorithm steps described in combination with the embodiments disclosed herein may be implemented in electronic hardware, or a combination of computer software and electronic hardware. Whether these functions are implemented in hardware or software depends on a specific application and design constraints of the technical solutions. A skilled person may use various methods to implement the described functions for each particular application, but such implementation should not be considered to be beyond the scope of the present application.

Those skilled in the art may clearly understand that for convenience and conciseness of description, the specific working processes of the systems, apparatuses and units described above, reference may be made to the corresponding processes in the method embodiments, which will not be repeated here.

In several embodiments provided by the present application, it should be understood that the disclosed systems, apparatuses and methods may be implemented in other ways. For example, the apparatus embodiments described above are only illustrative, for example, the division of the units is only a logical function division, and there may be other division modes in an actual implementation, for example, a plurality of units or components may be combined or integrated into another system, or some features may be ignored or not executed. On the other hand, the discussed or displayed mutual coupling or direct coupling or communication connection may be indirect coupling or communication connection through some interfaces, apparatuses or units, which may be in electrical, mechanical or other forms.

The unit described as a separate component may or may not be physically separated, and the component shown as a unit may or may not be a physical unit, i.e., it may be located in one place or may be distributed over multiple network units. Some or all of the units may be selected according to actual needs to achieve the objects of the solutions of the embodiments.

In addition, various functional units in various embodiments of the present application may be integrated in one processing unit, or the various units may be physically present separately, or two or more units may be integrated in one unit.

When the functions are implemented in the form of software functional units and sold or used as an independent product, the software functional units may be stored in a computer readable storage medium. Based on such understanding, the technical solution of the present application, in essence, or the part contributing to the prior art, or the part of the technical solution, may be embodied in the form of a software product stored in a storage medium. The computer software product is stored in a storage medium and includes several instructions for instructing a computer device (which may be a personal computer, a server, or a network device and the like) to perform all or part of the acts of the methods described in various embodiments of the present application. The storage medium includes any medium that can store program codes, such as a USB flash disk, a removable hard disk, a Read-Only Memory (ROM), a Random Access Memory (RAM), a magnetic disk, or an optical disk.

The foregoing descriptions are merely specific embodiments of the present application, but the protection scope of the present application is not limited thereto. Any variation or substitution that may be readily conceived by a person skilled in the art within the technical scope disclosed by the present application shall fall within the protection scope of the present application. Therefore, the protection scope of the present application shall be subjected to the protection scope of the claims.

**Claims**

1. A resource configuration method, applied to a terminal device, comprising:

   receiving first information; wherein the first information is used for obtaining a transmission resource, or the first information comprises a pre-configured/ semi-statically configured transmission resource indicated by a network side; and
   determining a transmission resource of a service of a first category based on the first information.

2. The method of claim 1, wherein the transmission resource at least comprises: a period and/or an offset of the service of the first category.

3. The method of claim 1 or 2, further comprising:

   receiving second information; wherein the second information is used for determining an effective start time of the transmission resource; and
   determining a usage start time of the transmission resource of the service of the first category based on the second information.

4. The method of any one of claims 1 to 3, wherein receiving the first information comprises:

   receiving the first information through one of a radio resource control (RRC) message, a medium access control (MAC) control element (CE), or a physical layer signaling;
   receiving the second information comprises:
   receiving the second information through one of an RRC message, a MAC CE, or a physical layer signaling.

5. The method of claim 4, wherein the first information comprises: an extended configured grant (CG) and/or an extended semi-persistent scheduling (SPS) configuration.

6. The method of claim 5, wherein the first information further comprises at least one of the following of at least one type of the service of the first category to be supported: a service period, a service offset, a service identification, a service priority, or a service category.

7. The method of claim 6, further comprising:

   receiving third information;
   wherein the third information is used for indicating a target CG/SPS resource used in transmitting the service of the first category, and comprises at least one of the following: an identification of the service of the first category, a priority of the service of the first category, a quality of service (QoS) identification, a CG/SPS period, an SPS resource identification, a CG resource identification, an identification associated with an SPS/CG resource, a resource usage priority, or a resource priority.

8. The method of claim 7, further comprising:
   transmitting and/or receiving the first service based on the target CG/SPS resource indicated in the third information.

9. The method of claim 4, wherein the first information comprises: a CG/SPS resource period corresponding to each type of service of the first category in N types of service of the first category; wherein N is an integer greater than or equal to 1.

10. The method of claim 9, wherein types of service of the first category are obtained by division based on a first factor, wherein the first factor comprises at least one of the following: a service period, latency, reliability, a reference time, a reference offset, a priority, or a specific identification.

11. The method of any one of claims 1 to 4, wherein the first message is auxiliary information used for obtaining the transmission resource.

12. The method of claim 11, wherein the transmission resource is determined through a transmission resource pattern; wherein the transmission resource pattern is used for indicating a pre-configured/semi-statically configured time domain resource and/or frequency domain resource, or the transmission resource pattern is used for determining a time domain resource and/or frequency domain resource for transmitting a first service.

13. The method of claim 12, wherein determining the transmission resource for the service of the first category based on the first information comprises:

    calculating a transmission resource pattern for the service of the first category according to the first information; wherein the transmission resource pattern is capable of representing an occupied time domain resource, a position of the time domain resource is an integer multiple of P, and P is a time length determined based on a service period and one symbol duration corresponding to sub-carrier spacing (SCS).

14. The method of claim 13, wherein the first information comprises at least one of the following: a service identification, a service period, a priority, a service duration, or a packet size;
    and/or,
    the second information comprises at least one of the following: a reference time point or an offset, or a usage indication identification.

15. The method of claim 14, further comprising:
    receiving fourth information; wherein the fourth information is used for indicating a used or activated transmission resource pattern.

16. The method of any one of claims 1 to 5, wherein the first information comprises at least one group of transmission resource patterns indicated by a network side; the transmission resource pattern is used for indicating a pre-configured/semi-statically configured time domain resource and/or frequency domain resource, or the transmission resource pattern is used for determining a time domain resource and/or frequency domain resource for transmitting a first service.

17. The method of claim 16, further comprising:
    receiving fourth information; wherein the fourth information is used for indicating a used or activated transmission resource pattern.

18. A resource configuration method, applied to a network device, comprising:

   sending first information to a terminal device;
   wherein the first information is used for obtaining a transmission resource, or the first information comprises a pre-configured/semi-statically configured transmission resource indicated by a network side.

19. The method of claim 18, further comprising:

   sending second information to the terminal device;
   wherein the second information is used for determining an effective start time of the transmission resource.

20. The method of claim 18 or 19, wherein sending the first information comprises:
   sending the first information through one of an RRC message, a MAC CE, or a physical layer signaling; sending the second information comprises:

   sending the second information through one of an RRC message, a MAC CE, or a physical layer signaling.

21. The method of claim 20, wherein the first information comprises: an extended configured grant (CG) and/or an extended semi-persistent scheduling (SPS) configuration.

22. The method of claim 21, wherein the first information further comprises at least one of following of at least one type of the service of the first category to be supported: a service period, a service offset, a service identification, a service priority, or a service category .

23. The method of claim 20, wherein the first information comprises: at least one group of CG/SPS resources.

24. The method of claim 23, further comprising:
   sending third information; wherein the third information is used for indicating a target CG/SPS resource used in transmitting the service of the first category;
   wherein the third information specifically includes at least one of the following: an identification of the service of the first category, a priority of the service of the first category, a QoS identification, a CG/SPS period, an SPS resource identification, a CG resource identification, an identification associated with an SPS/CG resource, a resource usage priority, or a resource priority.

25. The method of claim 20, wherein the first information further comprises:
   a CG/SPS resource period corresponding to each type of service of the first category of N types of service of the first category; wherein N is an integer greater than or equal to 1.

26. The method of claim 25, wherein types of service of first category are obtained by division based on a first factor;
   wherein the first factor comprises at least one of the following: a service period, latency, reliability, a reference time, a reference offset, a priority, or a specific identification.

27. The method of any one of claims 18 to 20, wherein the first message is auxiliary information for obtaining the transmission resource.

28. The method of claim 27, wherein the transmission resource is determined through a transmission resource pattern; wherein the transmission resource pattern is used for indicating a pre-configured/semi-statically configured time domain resource and/or frequency domain resource, or the transmission resource pattern is used for determining a time domain resource and/or frequency domain resource for transmitting the first service.

29. The method of claim 28, wherein the first information comprises at least one of: a service identification, a service period, or a service duration;
   and/or,
   the second information comprises at least one of the following: a reference time point or an offset, or a usage indication identification.

30. The method of claim 29, further comprising:

sending fourth information; wherein the fourth information is used for indicating a used or activated transmission resource pattern.

31. The method of any one of claims 18 to 20, further comprising:

calculating at least one group of transmission resource patterns for the service of the first category according to information of the service of the first category;

wherein the transmission resource pattern is capable of representing an occupied time domain resource, and a position of the time domain resource is an integer multiple of P; P is a time length determined based on a service period and one symbol duration corresponding to SCS.

32. The method of claim 31, wherein

the first information comprises at least one group of transmission resource patterns; the transmission resource pattern is used for indicating a pre-configured/semi-statically configured time domain resource and/or frequency domain resource, or the transmission resource pattern is used for determining a time domain resource and/or frequency domain resource for transmitting the first service.

33. The method of claim 31, further comprising:

sending fourth information; wherein the fourth information is used for indicating a transmission resource pattern used or activated by the terminal device.

34. A terminal device, comprising:

a first communication unit, configured to receive first information; wherein the first information is used for obtaining a transmission resource, or the first information comprises a pre-configured/semi-statically configured transmission resource indicated by a network side; and

a first processing unit, configured to determine a transmission resource of a service of the first category based on the first information.

35. The terminal device of claim 34, wherein the transmission resource at least comprises a period and/or an offset of the service of the first category.

36. The terminal device of claim 34 or 35, wherein the first communication unit is configured to receive second information; wherein the second information is used for determine an effective start time of the transmission resource; and

the first processing unit is configured to determine a usage start time of the transmission resource of the service of the first category based on the second information.

37. The terminal device of any one of claims 34 to 36, wherein

the first communication unit is configured to receive the first indication information through one of an RRC message, a MAC CE, or a physical layer signaling; and

the first communication unit is configured to receive the second information through one of an RRC message, a MAC CE, or a physical layer signaling.

38. The terminal device of claim 37, wherein the first information comprises: an extended configured grant (CG) and/or an extended semi-persistent scheduling (SPS) configuration.

39. The terminal device of claim 38, wherein the first information further comprises: at least one of the following of at least one type of the service of the first category to be supported:

a service period, a service offset, a service identification, a service priority, or a service category.

40. The terminal device of claim 37, wherein the first communication unit is configured to receive third information; wherein the third information is used for indicating a target CG/SPS resource used in transmitting the service of the first category, and comprises at least one of the following: an identification of the service of the first category, a priority of the service of the first category, a QoS identification, a CG/SPS period, an SPS resource identification, a CG resource identification, an identification associated with an SPS/CG resource, a resource usage priority, or a resource priority.

41. The terminal device of claim 40, wherein the first processing unit is configured to transmit and/or receive the first service based on the target CG/SPS resource indicated in the third information.

42. The terminal device of claim 37, wherein the first information comprises: a CG/SPS resource period corresponding to each type of service of the first category of N types service of the first category; N is an integer greater than or equal to 1.

43. The terminal device of claim 42, wherein types of service of the first category are obtained by division based on a first factor, wherein the first factor comprises at least one of the following: a service period, latency, reliability, a reference time, a reference offset, a priority, or a specific identification.

44. The second terminal device of any one of claims 34 or 37, wherein the first information is auxiliary information used for obtaining the transmission resource.

45. The terminal device of claim 44, wherein,

the transmission resource is determined through a transmission resource pattern;
wherein the transmission resource pattern is used for indicating a pre-configured/semi-statically configured time domain resource and/or frequency domain resource, or the transmission resource pattern is used for determining a time domain resource and/or frequency domain resource for transmitting a first service.

46. The terminal device of claim 45, wherein the first processing unit is configured to calculate a transmission resource pattern for the service of the first category according to the first information; and
the transmission resource pattern is capable of representing an occupied time domain resource, and a position of the time domain resource is an integer multiple of P; P is a time length determined based on a service period and one symbol duration corresponding to SCS.

47. The terminal device of claim 46, wherein the first information comprises at least one of following: a service identification, a service period, a priority, a service duration, or a packet size; and/or,
the second information comprises at least one of following: a reference time point or an offset, or a usage indication identification.

48. The terminal device of claim 47, wherein the communication unit is further configured to:
receive fourth information; wherein the fourth information is used for indicating a used or activated transmission resource pattern.

49. The terminal device of any one of claims 34 to 37, wherein the first information comprises at least one group of transmission resource patterns indicated by a network side; the transmission resource pattern is used for indicating a pre-configured/semi-statically configured time domain resource and/or frequency domain resource, or the transmission resource pattern is used for determining a time domain resource and/or frequency domain resource for transmitting a first service.

50. The terminal device of claim 49, wherein the first communication unit is further configured to:
receive fourth information; wherein the fourth information is used for indicating a used or activated transmission resource pattern.

51. A network device, comprising:

a second communication unit, configured to send first information to a terminal device.
wherein the first information is used for obtaining a transmission resource, or the first information comprises a pre-configured/semi-statically configured transmission resource indicated by a network side.

52. The network device of claim 51, wherein the second communication unit is configured to send second information to the terminal device,
wherein the second information is used for determining an effective start time of the transmission resource.

53. The network device of claim 51 or 52, wherein the second communication unit is configured to send the first information through one of an RRC message, a MAC CE, or a physical layer signaling; and

the second communication unit is configured to send the second information through one of an RRC message, a MAC CE, or a physical layer signaling.

54. The network device of claim 53, wherein the first information comprises an extended configured grant (CG) and/or an extended semi-persistent scheduling (SPS) configuration.

55. The network device of claim 54, wherein the first information further comprises: at least one of the following of at least one type of the service of the first category to be supported:
a service period, a service offset, a service identification, a service priority, or a service category.

56. The network device of claim 53, wherein the first information comprises: at least one group of CG/SPS resources.

57. The network device of claim 56, wherein the first communication unit is configured to send third information, wherein the third information is used for indicating a target CG/SPS resource used in transmitting the service of the first category;
the third information specifically comprises at least one of the following: an identification of the service of the first category, a priority of the service of the first category, a QoS identification, a CG/SPS period, an SPS resource identification, a CG resource identification, an identification associated with an SPS/CG resource, a resource use priority, or a resource priority.

58. The network device of claim 53, wherein the first information further comprises:
a CG/SPS resource period corresponding to each type of service of the first category of N types of service of the first category; N is an integer greater than or equal to 1.

59. The network device of claim 58, wherein types of service of the first category are obtained by division based on a first factor, wherein the first factor comprises at least one of the following: a service period, latency, reliability, a reference time, a reference offset, a priority, or a specific identification.

60. The network device of any one of claims 51 to 53, wherein the first message is auxiliary information used for obtaining the transmission resource.

61. The network device of claim 60, wherein,

the transmission resource is determined by a transmission resource pattern;
the transmission resource pattern is used for indicating a pre-configured/semi-statically configured time domain resource and/or frequency domain resource, or the transmission resource pattern is used for determining a time domain resource and/or frequency domain resource for transmitting the first service.

62. The network device of claim 61, wherein the first information comprises at least one of the following: a service identification, a service period, or a service duration;
and/or,
the second information comprises at least one of the following: a reference time point or an offset, or a usage indication identification.

63. The network device of claim 62, wherein the second communication unit is further configured to
sending fourth information; wherein the fourth information is used for indicating a used or activated transmission resource pattern.

64. The network device of any one of claims 51 to 53, further comprising:

a second processing unit, configured to calculate at least one group of transmission resource patterns for the service of the first category according to information of the service of the first category;
wherein the transmission resource pattern is capable of representing an occupied time domain resource, and a position of the time domain resource is an integer multiple of P; P is a time length determined based on a service period and one symbol duration corresponding to SCS.

65. The network device of claim 64, wherein
the first information comprises at least one group of transmission resource patterns;

wherein the transmission resource pattern is used for indicating a pre-configured/semi-statically configured time domain resource and/or frequency domain resource, or the transmission resource pattern is used for determining a time domain resource and/or a frequency domain resource for transmitting the first service.

66. The network device of claim 65, wherein the second communication unit is configured to transmit fourth information; wherein the fourth information is used for indicating a transmission resource pattern used or activated by the terminal device.

67. A terminal device, comprising a processor and a memory configured to store a computer program capable of being run on the processor,
wherein the memory is configured to store a computer program; the processor is configured to call and run the computer program stored in the memory to execute acts of the method of any one of claims 1-17.

68. A network device, comprising a processor and a memory configured to store a computer program capable of being run on the processor,
wherein the memory is configured to store a computer program; the processor is configured to call and run the computer program stored in the memory to execute acts of the method of any one of claims 18-33.

69. A chip, comprising: a processor, configured to call and run a computer program from a memory, to enable a device in which the chip is installed to execute the method of any one of claims 1-17.

70. A chip, comprising: a processor, configured to call and run a computer program from a memory, to enable a device in which the chip is installed to execute the method of any one of claims 18-33.

71. A computer readable storage medium, configured to store a computer program, wherein when the computer program is run on a computer, the computer is enabled to execute acts of the method of any one of claims 1-32.

72. A computer program product, comprising computer program instructions, wherein when the computer program instructions are executed by a computer, the computer is enabled to execute the method of any one of claims 1-33.

73. A computer program, wherein when the computer program is run on a computer, the computer is enabled to execute the method of any one of claims 1-33.

**100**

110

120                                                    120

FIG. 1-1

EP 3 902 329 A1

**Logical (TSN) bridge**

**3GPP5GS**

Device side of bridge

Network side of bridge

TSN system

UDM — NEF

N8    N10    N33

AMF  N11  SMF  N7  PCF  N5  AF as TSN translator (CP)

TSN CUC

TSN CNC

N1  N2

TSN bridge/ End station

TSN translator (device)  N60  UE  RAN  N3  UPF  N6  TSN translator (UP)

N4

N9

TSN bridge/ End station

FIG. 1-2

21

Receiving first information; herein the first information is used for obtaining a transmission resource, or the first information includes a pre-configured/ semi-statically configured transmission resource indicated by a network side

22

Determining a transmission resource of a service of a first category based on the first information

FIG. 2

| Terminal device | | Network device |

According to a first factor, classifying TSN services into N types, configuring N SPS/CG resources as first information, and sending the first information and the third information to the terminal device

First information and third information

Obtaining a configured CG/ SPS resource according the first information, determining a target resource of a target service of a first category according to the third information, then performing a service transmission based on the target resource

FIG. 3

| Terminal device | | Network device |
|---|---|---|

First information and/or second information

Determining a transmission resource pattern according to the first information, and/or, determining a start time point used in transmitting the transmission resource pattern according to the second information

## FIG. 4

| Terminal device | | Network device |
|---|---|---|

Configuring a transmission resource pattern through first information, and/or sending second information

Obtaining the transmission resource pattern configured by the first information for TSN service transmission, and/or, determining a start time point used in transmitting the transmission resource pattern according to the second information

## FIG. 5

Sending first information to a terminal device — 31

FIG. 6

| First processing unit 42 | First communication unit 41 |

FIG. 7

Second communication unit 51

↓

Second processing unit 52

FIG. 8

Communication device 600

Memory
620

Processor
610

Transceiver
630

FIG. 9

Chip 700

Input
interface
730

Processor
710

Memory
720

Output
interface
740

FIG. 10

Communication
system 800

| Terminal device | | Network device |

810

820

FIG. 11

## INTERNATIONAL SEARCH REPORT

International application No.

**PCT/CN2019/075124**

| A. | CLASSIFICATION OF SUBJECT MATTER |
|---|---|

H04W 48/10(2009.01)i

According to International Patent Classification (IPC) or to both national classification and IPC

| B. | FIELDS SEARCHED |
|---|---|

Minimum documentation searched (classification system followed by classification symbols)

H04L; H04W; H04Q

Documentation searched other than minimum documentation to the extent that such documents are included in the fields searched

Electronic data base consulted during the international search (name of data base and, where practicable, search terms used)

CNKI, CNABS, CNTXT, 3GPP, SIPOABS, DWPI, WOTXT, EPTXT, USTXT: 资源, 分配, 配置, 第一类, 第一种, 业务, 标识, 周期, 偏移, 类别, 图样; resource, allocate, configure, first, service, identifier, period, offset

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 106937356 A (HUAWEI TECHNOLOGIES CO., LTD.) 07 July 2017 (2017-07-07) description, paragraphs [0061]-[0085] | 1-10, 18-26, 34-43, 51-59, 67-73 |
| Y | CN 106937356 A (HUAWEI TECHNOLOGIES CO., LTD.) 07 July 2017 (2017-07-07) description, paragraphs [0061]-[0085] | 11-17, 27-33, 44-50, 60-66 |
| Y | CN 109219015 A (CHINA ACADEMY OF TELECOMMUNICATIONS TECHNOLOGY) 15 January 2019 (2019-01-15) the abstract | 11-17, 27-33, 44-50, 60-66 |
| A | CN 108260210 A (HUAWEI TECHNOLOGIES CO., LTD.) 06 July 2018 (2018-07-06) entire document | 1-73 |
| A | US 2018368117 A1 (SHARP LABORATORIES AMERICA, INC.) 20 December 2018 (2018-12-20) entire document | 1-73 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 October 2019** | **06 November 2019** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT
### Information on patent family members

| International application No. |
|---|
| **PCT/CN2019/075124** |

| Patent document cited in search report | | | Publication date (day/month/year) | Patent family member(s) | | | Publication date (day/month/year) |
|---|---|---|---|---|---|---|---|
| CN | 106937356 | A | 07 July 2017 | WO | 2017114022 | A1 | 06 July 2017 |
| | | | | EP | 3389311 | A4 | 17 October 2018 |
| | | | | US | 2018310277 | A1 | 25 October 2018 |
| | | | | EP | 3389311 | A1 | 17 October 2018 |
| CN | 109219015 | A | 15 January 2019 | TW | 201907739 | A | 16 February 2019 |
| | | | | WO | 2019007183 | A1 | 10 January 2019 |
| CN | 108260210 | A | 06 July 2018 | WO | 2018121522 | A1 | 05 July 2018 |
| | | | | EP | 3550908 | A1 | 09 October 2019 |
| US | 2018368117 | A1 | 20 December 2018 | | None | | |

Form PCT/ISA/210 (patent family annex) (January 2015)